# EUROPEAN PATENT APPLICATION

(11) **EP 2 760 215 A1**
(43) Date of publication of application: **30.07.2014**
(21) Application number: 13194964.6
(22) Date of filing: 28.11.2013
(51) Int. Cl.: H04N 21/462, H04N 21/466

(54) **Image display apparatus, content recommendation information receiving method, server and content recommendation method**

(30) Priority: 25.01.2013 KR 20130008753
(71) Applicant: Samsung Electronics Co., Ltd, Gyeonggi-do 443-742 (KR)
(72) Inventor: Jeong, Seok-hyun, Seoul (KR); Lee, Sang-kwon, Gyeonggi-do (KR); Lee, Young-hwan, Seoul (KR); Han, Se-jun, Gyeonggi-do (KR)
(74) Representative: Hewett, Jonathan Michael Richard

(57) **Abstract**

An image display apparatus, a content recommendation information receiving method, a server and a content recommendation method are disclosed. The image display apparatus includes: a communicator configured to communicate with an external server; a plurality of content receivers respectively connected to a plurality of content providers; and a controller configured to transmit to the server information related to the plurality of content receivers and the plurality of content providers which correspond to the plurality of content receivers and a user viewing history, and receives from the server content recommendation information based on the viewing history out of contents provided by all of the plurality of content providers. Thus, there is provided an image display apparatus and a method of receiving content recommendation information, which are capable of displaying comprehensive information of contents that may be provided through the plurality of content receivers.

## Description

The present invention relates to an image display apparatus, a method of receiving content recommendation information, and a server and content recommendation method. More particularly, the present invention relates to an image display apparatus including a plurality of content receivers and a method of receiving content recommendation information, a server which communicates with the image display apparatus, and a content recommendation method thereof.

In line with the development of technology, a single electronic product may be equipped with various functions and may be provided as a multi-function product ensuring improved convenience and functionality. In particular, the development of network infrastructure and Internet informationization has contributed to the widespread technology of adding the Internet function to electronic products.

Among the multi-function electronic products, a TV may receive various contents from an external server through the Internet, and may include a plurality of connectors receiving various contents, and may receive a broadcast signal through an antenna.

Accordingly, a user may experience various contents using a plurality of broadcast signals and services such as VOD provided by content providers. In such an environment, it is necessary to find a way for a user to easily and conveniently search numerous contents from the Internet, or search contents which the TV may obtain via other routes.

Accordingly, one or more exemplary embodiments of the present invention may provide an image display apparatus and a method of receiving content recommendation information which are capable of displaying comprehensive information relating to contents that may be provided through a plurality of content receivers.

Another exemplary embodiment provides a server and a content recommendation method thereof, which provide comprehensive content recommendation information that may be provided to a user by taking into account content received by a display apparatus.

Still another exemplary embodiment may provide an image display apparatus, a method of receiving content recommendation information, a server and a content recommendation method, which provide a user with optimum content information out of contents provided by a plurality of content providers.

The foregoing and/or other aspects may be achieved by providing an image display apparatus including: a communicator configured to communicate with an external server; a plurality of content receivers configured to be connected to a plurality of content providers; and a controller configured to transmit information related to the plurality of content receivers and the plurality of content providers which correspond to the plurality of content receivers, to transmit to a server a user viewing history, and receive from the server content recommendation information based on the viewing history out of contents provided by all of the plurality of content providers.

The controller may be configured to receive content recommendation information that is generated by taking into account at least one of currently viewable or available contents, available contents in time sequence, cost, picture quality, sound quality, whether or not there is subtitle service, and user preference.

In response to a new device being connected to one of the plurality of content receivers, the controller may transmit territorial information including at least one of a zip code, a name of territory, and an Internet protocol to the server and may request that the server provide information related to the content providers.

The controller may be configured to receive from the server information related to content providers which provide a content to the content receivers connected to the device, and transmit to the server a user selection signal in order to select one of the content providers.

In response to the content included in the content recommendation information not being a content provided by a content provider connected to a content receiver currently receiving the content, the controller may replace the current content receiver with the content receiver connected to the content provider, which is providing the content.

Another aspect of the exemplary embodiment may be achieved by providing a method of receiving content recommendation information related to an image display apparatus including a plurality of content receivers respectively connected to a plurality of content providers, the method including: transmitting information related to the plurality of content receivers and the plurality of content providers which correspond to the plurality of content receivers, to an external server, and transmitting a user viewing history; and receiving from the server content recommendation information based on the viewing history, out of contents provided by all of the plurality of content providers.

The method may further include transmitting to the server territorial information including at least one of a zip code, a name of territory and an Internet protocol in response to a new device being connected to one of the plurality of content receivers; and requesting that the server provide information related to the content providers.

The method may further include: receiving from the server information related to content providers which provide a content to a content receiver connected to the device; and transmitting to the server a user selection signal in order to select one of the content providers.

In response to the content included in the content recommendation information not being a content provided by a content provider connected to a content receiver currently receiving the content, the method may further include replacing the current content receiver with a content receiver connected to the content provider which provides the content.

Another aspect of an exemplary embodiment may be achieved by providing a server which provides an image display apparatus with content recommendation information including: a storage part; and a controller configured to receive from the image display apparatus information related to a plurality of content receivers of the display apparatus and a plurality of content providers which correspond to the plurality of content receivers and a user viewing history, and stores such information and user viewing history in the storage part, and generates and transmits to the display apparatus content recommendation information based on the viewing history out of contents provided by all of the plurality of content providers.

The controller may generate the content recommendation information by taking into account at least one of currently viewable or available content, available content in time sequence, cost, picture quality, sound quality, whether or not there is subtitle service and user preference.

The controller may transmit information related to content providers providing a content, together with the content recommendation information.

Another aspect of an exemplary embodiment may be achieved by providing a content recommendation method of a server which provides an image display apparatus with content recommendation information, the method including: receiving from the image display apparatus information related to a plurality of content receivers of the image display apparatus and a plurality of content providers which correspond to the plurality of content receivers, and a user viewing history; generating content recommendation information based on the viewing history out of contents provided by all of the plurality of content providers; and transmitting to the display apparatus the content recommendation information.

The generating content recommendation information may include generating the content recommendation information by taking into account at least one of currently viewable or available content, available content in time sequence, cost, picture quality, sound quality, whether or not there is subtitle service and a user preference.

The method may further include transmitting information related to content providers providing a content, together with the content recommendation information.

As described above, one or more exemplary embodiments provide an image display apparatus and a method of receiving content recommendation information, which are capable of displaying comprehensive information of contents that may be provided through a plurality of content receivers.

Another exemplary embodiment is to provide a server and a content recommendation method thereof, which provide comprehensive content recommendation information that may be provided to a user by taking into account content receivers of a display apparatus.

Still another exemplary embodiment may provide an image display apparatus, a method of receiving content recommendation information, a server and content recommendation method which provides a user with optimum content information out of contents provided by a plurality of content providers.

An aspect of an exemplary embodiment may further provide an image display apparatus including: a controller configured to transmit to a server information related to a plurality of content receivers and a plurality of content providers which correspond to a plurality of content receivers and a user viewing history, and configured to receive recommendation information based on the viewing history.

The image display apparatus may further include a communicator configured to communicate with an external server. The image display apparatus may further include a plurality of content receivers configured to be connected to a plurality of content providers.

The controller may be configured to receive recommendation information based on the viewing history from the server. The controller may additionally be configured to receive the recommendation information based on the viewing history of contents provided by all of the plurality of content providers.

In response to a new device being connected to one of the plurality of content receivers, the controller may be configured to transmit to the server territorial information comprising at least one of a zip code, a name of territory, and an Internet protocol, and requests that the server provide information related to the content providers.

The above and/or other aspects will become apparent and more readily appreciated from the following description of the exemplary embodiments, taken in conjunction with the accompanying drawings, in which:
FIG. 1 is a schematic view of an image display apparatus and a server according to an exemplary embodiment;
FIG. 2 is a control block diagram of an image display apparatus and a server according to an exemplary embodiment;
FIG. 3 is a control flowchart of a method of receiving content recommendation information of the image display apparatus and the server according to an exemplary embodiment;
FIGS. 4A and 4B illustrate a setting process of content providers according to an exemplary embodiment; and
FIG. 5 illustrates content recommendation information that is provided by the server according to an exemplary embodiment.

Below, exemplary embodiments will be described in detail with reference to accompanying drawings so as to be easily understood by a person having ordinary knowledge in the art. The present invention may be embodied in various forms without being limited to the exemplary embodiments set forth herein. Descriptions of well-known parts are omitted for clarity, and like reference numerals refer to like elements throughout.

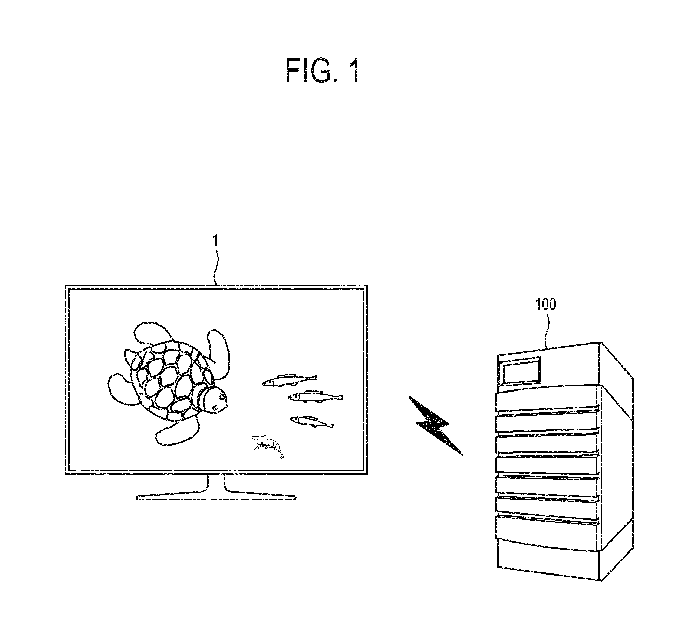

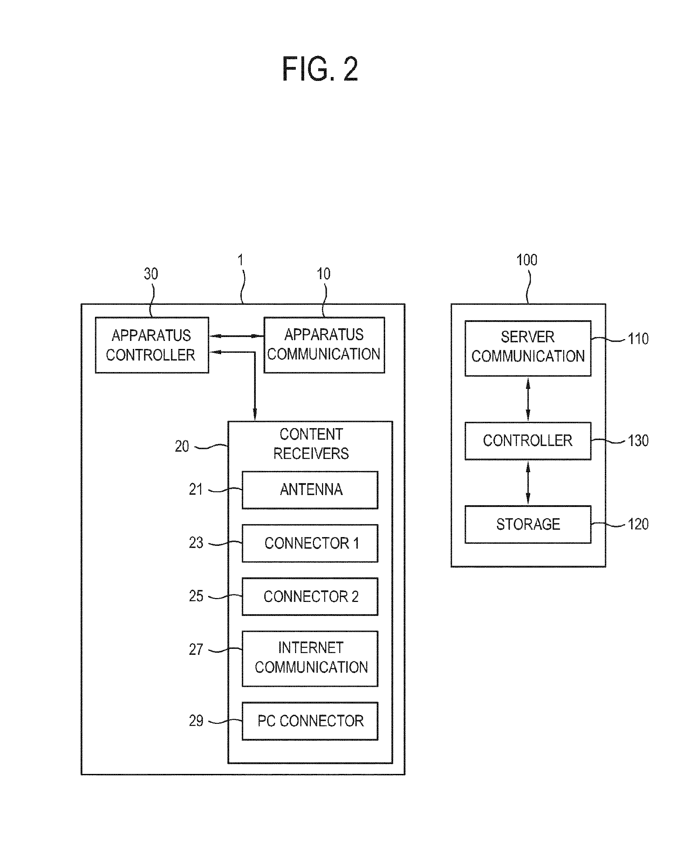

FIG. 1 is a schematic view of an image display apparatus and a server according to an exemplary embodiment. FIG. 2 is a control block diagram of an image display apparatus and a server according to an exemplary embodiment. As shown therein, an image display apparatus 1 and a server 100 communicate with each other, set a content provider, and exchange content recommendation information that may be provided by the content provider. The image display apparatus 1 according to an exemplary embodiment includes an apparatus communicator 10, a content receiver 20 and an apparatus controller 30 configured to control the foregoing elements. The image display apparatus 1 may be implemented as an Internet TV or smart TV which may receive various services using the Internet protocol or as a personal terminal such as a PC, mobile phone, smart phone, portable multimedia player (PMP), netbook, laptop computer, e-book, etc. The image display apparatus 1 includes any device which may receive, display and execute contents provided by various content providers through the Internet. The image display apparatus 1 according to an exemplary embodiment may receive a broadcasting signal through an intermediary such as a set-top box (not shown). The content according to an exemplary embodiment refers to any information that may be displayed, played and implemented by the image display apparatus 1 including broadcasting signals, texts, photos, still images, videos, movies and music. Of course, the image display apparatus 1 further includes image and audio signal processors, and a display and audio output part which output the images and audio, all of which are not shown. The image display apparatus 1 may further include a user input such as a remote controller to generate a user selection signal.

The server 100 provides various content provider (not shown) information to the apparatus communicator 10 of the image display apparatus 1, and broadcast schedule information of content providers and content recommendation information. The server 100 includes a server communicator 110, a storage 120, and a server controller 130 configured to control the foregoing elements and generate content recommendation information. The server 100 refers to a system which communicates with the image display apparatus 1 and provides the aforementioned information, and is shown as a single structure for convenience of description. That is, the server 100 may receive from an additional server metadata of content provider information or content recommendation information and may provide the metadata to the image display apparatus 1, or may collect, generate and provide the information to the image display apparatus 1.

The apparatus communicator 10 and the server communicator 110 communicate with each other through a predetermined network such as the wired/wireless Internet, and may exchange various information between the image display apparatus 1 and server 100. The apparatus communicator 10 and the server communicator 110 may be implemented as an Internet communication. The apparatus communicator 10 requests that the server 100 provide information related to content providers that may provide contents and content recommendation information, and receives corresponding information from the server 100.

The content receiver 20 is plurally provided to be connected to a plurality of content providers. The content receivers 20 may include an antenna 21 to receive airwave broadcast signals, a plurality of connectors 23 and 25, such as high definition multimedia interface (HDMI) or Component and S-Video, to receive IPTV broadcast signals or satellite broadcasts or cable broadcasts, an Internet communicator 27 to receive content through an application or widget, and a PC connector 29 to be connected to a PC. The content receivers 20 are not limited to those shown in the drawings, and include all of wired and wireless communicators that may be included in the image display apparatus 1 in order to receive a content.

To receive a content from the content providers, the content receivers 20 should be connected to the content providers. To do so, the content receivers 20 should perform a device connecting process. The device according to an exemplary embodiment may include a cable for connecting the content providers or a modem for wireless connection thereto. In response to a particular content provider being connected to the content receivers 20, the image display apparatus 1 according to an exemplary embodiment informs the server 100 of such connection information.

The storage 120 of the server 100 stores therein information related to the content receivers 20 included in the image display apparatus 1 and information related to content providers which provide content to the respective content receivers 20. The storage 120 further stores therein information related to viewing history transmitted by the image display apparatus 1.

The apparatus controller 30 transmits to the server 100 information related to the plurality of content receivers 20 and a plurality of content providers which correspond to the plurality of content receivers 20 and a user viewing history, and receives from the server 10 content recommendation information based on the viewing history out of contents which may be provided by all of the plurality of content providers. In response to a new device being connected to one of the plurality of content receivers 20, the apparatus controller 30 may transmit territorial information of the image display apparatus 1 to the server 100, and may request that the server 100 to provide the information related to the content providers.

Server controller 130 then receives from the image display apparatus 1 information related to the plurality of content receivers 20 of the image display apparatus 1 and the plurality of content providers which correspond to the plurality of content receivers 20 and a user viewing history, and generates and transmits to the image display apparatus 1 content recommendation information based on the viewing history out of contents, that may be provided by all of the plurality of content providers.

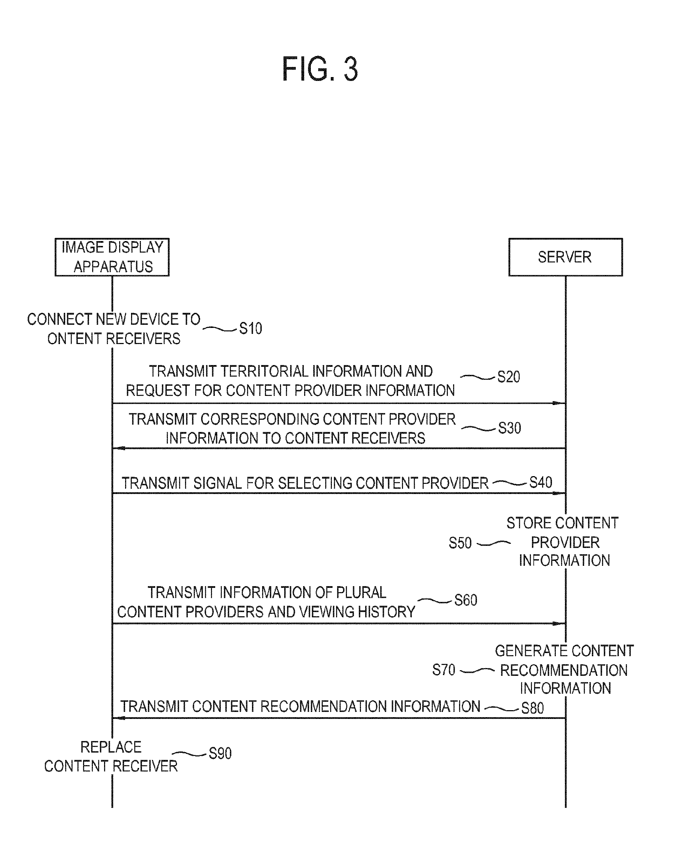

FIG. 3 is a control flowchart of a content recommendation information receiving method of the image display apparatus and the server, according to an exemplary embodiment. Hereinafter, the control method of recommending content according to an exemplary embodiment will be described with reference to FIG. 3.

A new device is connected to one of the content receivers 20 of the image display apparatus 1 (S10). Such connection may be performed in response to the image display apparatus 1 being initially booted or the content provider being replaced or a new content provider being connected. A user may connect a new content provider to a new content receiver 20 irrespective of the content providers which are currently connected.

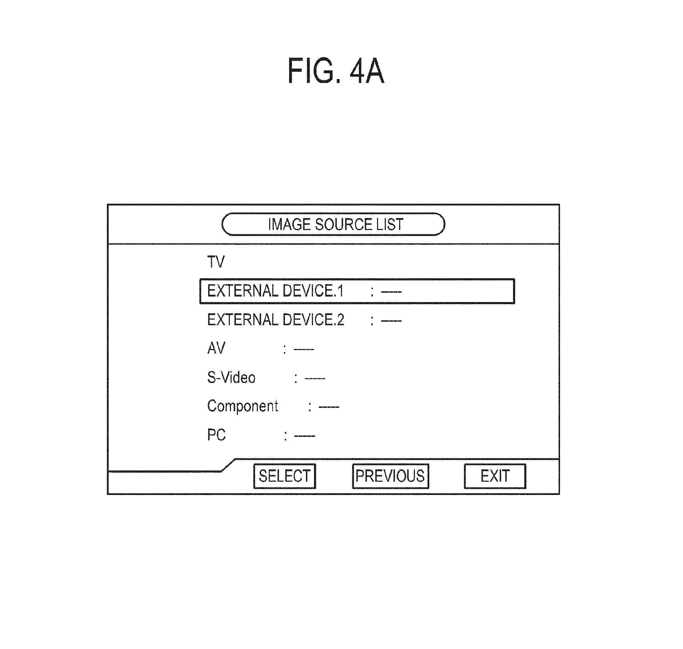

FIG. 4A illustrates a graphic user interface (GUI) displayed on the display part of the image display apparatus 1 in response to a new device being connected to the content receiver 20 of the image display apparatus 1. As shown therein, "image source list" for the plurality of content receivers 20 is displayed on top of the GUI, and examples of the plurality of content receivers 20 of the image display apparatus 1 are displayed therebelow. In response to a user selecting "external device 1" as a connector to which the device may be connected, the apparatus controller 30 transmits to the server 100 information related to the type of the content receivers 20, i.e. HDMI or component terminal.

The apparatus controller 30 transmits to server 100 territorial information including at least one of zip code, name of territory and Internet protocol together with the information of the content receivers 20, and requests that the server 100 provide the information related to the content providers (S20).

The server 100 may identify substantial territorial information of the image display apparatus 1 based on territorial information such as the Internet protocol, and generates and transmits to the image display apparatus 1 information related to at least one content provider that may provide a content based on the territorial information (S30). The storage 120 of the server 100 may store therein information of content providers which correspond to the territorial information of the image display apparatus 1 or may obtain information related to the content providers from an external source.

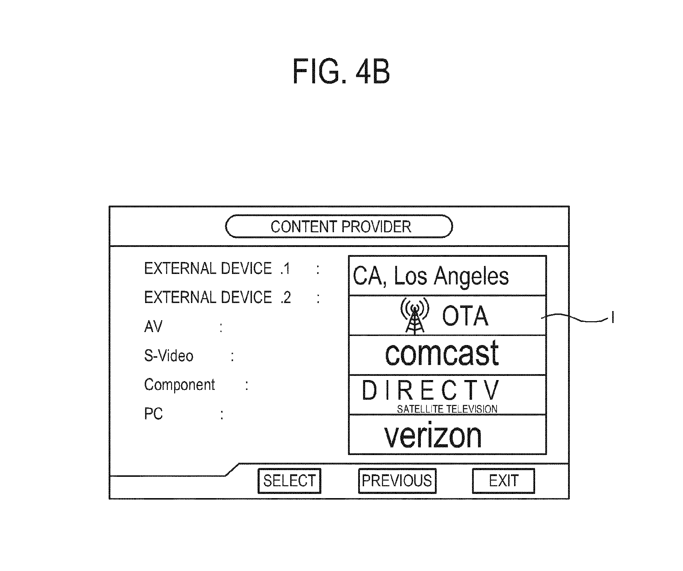

In response to the content provider which may provide a content to the content receivers 20 connected to the device in the territory where the image display apparatus 1 is located not being single but rather being plural, the server 100 may generate a list of content providers and may provide the list to the image display apparatus 1. FIG. 4B illustrates a list of content providers I displayed by the image display apparatus 1 according to an exemplary embodiment. As shown therein, the content providers which may provide a content through the content receivers of "external apparatus. 2" are plural providers including CA, Los Angeles, OTA, Comcast, DIRECTV and VERIZON. A user may select one of the plurality of content providers by using the information related to content providers provided by the server 100, and the information of content provider selected by the user is transmitted to the server 100 (S40).

The server 100 stores the content receiver 20 of the image display apparatus and the corresponding content provider (S50).

Of course, the user may request that the server 100 provide information related to new content providers in order to replace or delete the existing content providers. Such change information of the content providers may be stored in the server 100.

By the aforementioned method, a plurality of content providers may be connected to the plurality of content receivers 20. The user may view a content provided by various content providers, and the apparatus controller 30 may store the viewed content by category and generate viewing history information. For example, the apparatus controller 30 may generate data using information related to the frequently viewed content by time, viewing history by genre, viewing history by user in response to a plurality of users using the image display apparatus 1, and viewing history by the content provider.

The apparatus controller 30 transmits the collected viewing history information together with information of the plurality of content receivers 20 and the plurality of content providers which correspond to the plurality of content receivers 20 (S60) to server 100. That is, the apparatus controller 30 transmits to the server 100 individual content source information regarding the reception of broadcast airwaves through the antenna 21, reception of satellite broadcasting through the connector 123, and reception of cable broadcasting through the connector 2 of content receiver 25 to the server 100.

Based on the viewing history provided by the image display apparatus 1, the server controller 130 of the server 100 generates content recommendation information with respect to contents of all content providers connected to the image display apparatus 1 (S70). The server 100 may include its own search engine or may receive search results from other external servers having metadata for content recommendation information.

The server controller 130 may generate content recommendation information by using the content which is very similar to the currently viewed content and thus may be viewed in real-time, e.g., a previous episode in program series or a content that may be viewed in the near future. Such content recommendation information may include a content list which summarizes a plurality of contents rather than a single content, in time sequence or by content provider. In response to there being no broadcast content relating to the currently viewed content, the server controller 130 may recommend a VOD content. The VOD content may be provided to the image display apparatus 1 through the Internet communication 29 using a particular application. The server controller 130 may recommend a free content, or a better content considering picture quality or sound quality or subtitle service in response to a recommendation of recommending the same content as the plurality of content providers provides. In this case, the content providers may be provided together for a user to select one of the plurality of contents. Otherwise, the server controller 130 may firstly recommend a content of the content provider that is mainly used by a user. According to another exemplary embodiment, in response to the image display apparatus 1 transmitting ID of a particular user and viewing history thereof, the server controller 130 may generate content recommendation information to the user. That is, the server controller 130 may generate content recommendation information in time sequence, or by cost, quality of image signal, user preference or user. In response to no broadcasting content being recommendable, the server controller 130 may recommend the VOD content. In response to a single content being provided by the plurality of content providers, the server controller 130 generates content recommendation information in the order of content that has a quality image signal and incurs less cost, and transmits the generated content recommendation information to the image display apparatus 1 (S80).

According to another exemplary embodiment, in response to the image display apparatus 1 being aware of the information of the content provider, whether connected or set, the image display apparatus 1 may not request that the server 2 provide the information related to the content providers. In this case, the image display apparatus 1 may transmit to the server 2 information related to the content providers and viewing history, and may receive content recommendation information based on such information and history from the server 2. That is, based on the information of the content providers provided by the image display apparatus 1, the server 2 may provide the image display apparatus 1 with content recommendation information relating to the content.

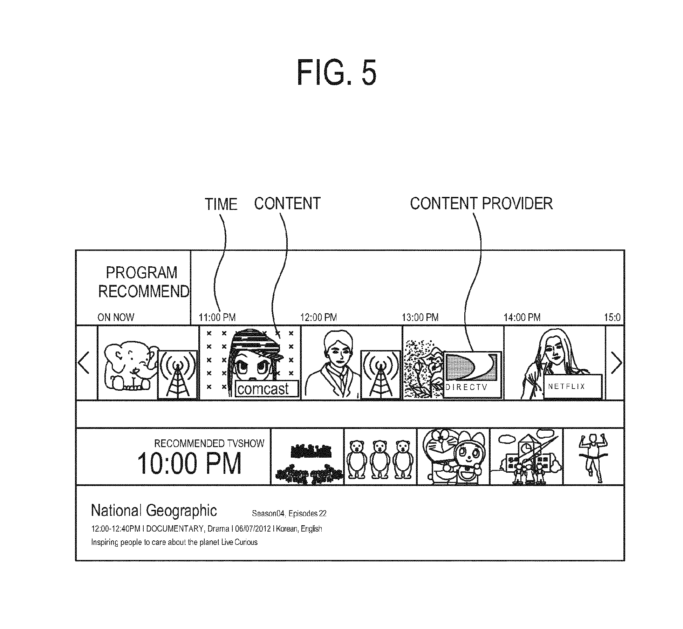

FIG. 5 illustrates content recommendation information provided by a server according to an exemplary embodiment. As shown therein, the content recommendation information provided by the server 100 includes a content program, a name of content provider providing the content program, and time information for viewing the content.

In response to the content included in the content recommendation information not being a content provided by a content provider connected to a content receiver receiving the content currently, the user may replace the current content receiver with the content receiver connected to the content provider providing a desired content (S90). That is, the image display apparatus 1 provides a user environment in which a user may change the content provider in the same manner as if he/she changes a channel.

According to an exemplary embodiment, a user may easily obtain various content information provided by all of content providers currently connected, and may easily change a desired content. While, in the related art, contents of connected content connected are recommended for the user, the content recommendation method according to an exemplary embodiment improves quantity and quality of contents that may be selected by the user, and may encourage competition in good faith among content providers.

As described above, the image display apparatus and the content recommendation information receiving method according to an exemplary embodiment may display comprehensive information of contents that may be provided through a plurality of content receivers.

Further, the server and the content recommendation method thereof according to an exemplary embodiment provides comprehensive content recommendation information that may be provided to the user, by taking into account content receivers of the image display apparatus.

Further, the image display apparatus, the content recommendation information receiving method, the server and the content recommendation method according to an exemplary embodiment may provide optimum content information to a user, out of contents provided by a plurality of content providers.

Although a few exemplary embodiments have been shown and described, it will be appreciated by those skilled in the art that changes may be made in these exemplary embodiments without departing from the invention, the scope of which is defined in the appended claims.

## Claims

1. An image display apparatus comprising:
a communicator configured to communicate with an external server;
a plurality of content receivers configured to be connected to a plurality of content providers, respectively; and
a controller configured to transmit to the server information related to the plurality of content receivers and the plurality of content providers which correspond to the plurality of content receivers and a user viewing history, and configured to receive from the server content recommendation information based on the viewing history out of contents provided by all of the plurality of content providers.

2. The image display apparatus according to claim 1, wherein the controller is configured to receive content recommendation information that is generated by taking into account at least one of currently viewable or available contents, available contents in time sequence, cost, picture quality, sound quality, whether or not there is subtitle service, and user preference.

3. The image display apparatus according to claim 1 or 2, wherein in response to a new device being connected to one of the plurality of content receivers, the controller is configured to transmit to the server territorial information comprising at least one of a zip code, a name of territory, and an Internet protocol, and requests that the server provide information related to the content providers.

4. The image display apparatus according to any one of claims 1 to 3, wherein the controller is configured to receive from the server information related to content providers which provide a content to the content receivers connected to the device, and transmits to the server a user selection signal to select one of the content providers.

5. The image display apparatus according to any one of claims 1 to 4, wherein in response to the content comprised in the content recommendation information not being a content provided by a content provider connected to a content receiver currently receiving the content, the controller is configured to replace the current content receiver with the content receiver connected to the content provider providing the content.

6. A method of receiving content recommendation information related to an image display apparatus comprising a plurality of content receivers configured to be connected respectively to a plurality of content providers, the method comprising:
transmitting to an external server information related to the plurality of content receivers and the plurality of content providers which corresponds to the plurality of content receivers, and a user viewing history; and
receiving from the server content recommendation information based on the viewing history, out of contents provided by all of the plurality of content providers.

7. The method according to claim 6, further comprising:
transmitting to the server territorial information comprising at least one of a zip code, a name of territory and an Internet protocol in response to a new device being connected to one of the plurality of content receivers; and
requesting that the server provide information related to the content providers.

8. The method according to claim 6 or 7, further comprising:
receiving from the server information related to content providers which provide a content to a content receiver connected to the device; and
transmitting to the server a user selection signal in order to select one of the content providers.

9. The method according to any one of claims 6 to 8, further comprising, in response to the content comprised in the content recommendation information not being a content provided by a content provider connected to a content receiver currently receiving the content, replacing the current content receiver with a content receiver connected to the content provider providing the content.

10. A server which provides an image display apparatus with content recommendation information comprising:
a storage; and
a controller configured to receive from the image display apparatus information related to a plurality of content receivers of the display apparatus and a plurality of content providers which correspond to the plurality of content receivers and a user viewing history, and stores such information and user viewing history in the storage, and generates and transmits to the display apparatus content recommendation information based on the viewing history, out of contents provided by all of the plurality of content providers.

11. The server according to claim 10, wherein the controller is configured to generate the content recommendation information by taking into account at least one of currently viewable or available content, available content in time sequence, cost, picture quality, sound quality, whether or not there is subtitle service, and user's preference.

12. The server according to claim 10 or 11, wherein the controller is configured to transmit information related to content providers providing a content, together with the content recommendation information.

13. A method of recommending content of a server which provides an image display apparatus with content recommendation information, the method comprising:
receiving from the image display apparatus information related to a plurality of content receivers of the image display apparatus and a plurality of content providers which correspond to the plurality of content receivers, and a user viewing history;
generating content recommendation information based on the viewing history, out of contents provided by all of the plurality of content providers; and
transmitting the content recommendation information to the display apparatus.

14. The method according to claim 13, wherein generating the content recommendation information comprises generating the content recommendation information by taking into account at least one of currently viewable or available content, available content in time sequence, cost, picture quality, sound quality, whether or not there is subtitle service, and user preference.

15. The method according to claim 13 or 14, further comprising transmitting information related to content providers providing a content, together with the content recommendation information.
